# EUROPEAN PATENT APPLICATION

(11) **EP 4 637 170 A1**
(43) Date of publication of application: **22.10.2025**
(21) Application number: 23903033.1
(22) Date of filing: 28.08.2023
(51) Int. Cl.: H04N 23/63, H04N 5/222, H04N 23/40, H04N 23/60

(54) **ELECTRONIC DEVICE**

(30) Priority: 15.12.2022 JP 2022200364
(71) Applicant: CANON KABUSHIKI KAISHA, Tokyo 146-8501 (JP)
(72) Inventor: YANAGIBASHI, Ken, Tokyo 146-8501 (JP)
(74) Representative: TBK
(86) International application number: PCT/JP2023/030854
(87) International publication number: WO 2024/127729

(57) **Abstract**

An electronic device according to the present invention includes an acquisition unit configured to acquire an input video, an output unit configured to output a plurality of output videos respectively corresponding to a plurality of regions in the input video, a reception unit configured to receive a tally signal for at least one of the plurality of output videos, and a control unit configured to perform control such that a display video that is a video based on the input video and is a video in which the plurality of regions is identifiable is displayed, wherein the control unit performs control such that it is identifiable in the display video which of the plurality of regions the received tally signal corresponds to.

## Description

### [Technical Field]

The present invention relates to an electronic device, and more particularly to a technique of setting a part of a region of a captured video as a cropped region and delivering a video corresponding to the cropped region.

### [Background Art]

In a system that performs video delivery, for example, one or more electronic devices are connected to a switcher. In response to an instruction from the user, a video output from the switcher (a video to be delivered) is appropriately switched among a plurality of videos input to the switcher. In the switcher, a video (PGM output video) output as the on-air video from the switcher and a video (NEXT output video) scheduled to be output subsequently as the on-air video are set. The switcher transmits a tally signal corresponding to a PGM output video to an electronic device that outputs the PGM output video and transmits a tally signal corresponding to a NEXT output video to an electronic device that outputs the NEXT output video.

When the tally signal transmitted from the switcher is received, the electronic device turns on a tally lamp. For example, the electronic device turns on the tally lamp in red when the tally signal corresponding to the PGM output video is received. The electronic device turns on the tally lamp in green when the tally signal corresponding to the NEXT output video is received. Accordingly, the user of the electronic device can ascertain whether the video output from the electronic device is the PGM output video, the NEXT output video, or neither the PGM output video nor the NEXT output video.

A cropping function of setting a part of a region of a captured video as a cropped region and outputting a video corresponding to the cropped region to the outside is known. A position and a size of the cropped region can be changed in response to an instruction (operation) from the user. By displaying a frame indicating the cropped region superimposed on a video (entire video) corresponding to the entire region of the captured video, the user can ascertain the cropped region and can also confirm a region other than the cropped region.

The electronic device (one electronic device) may simultaneously output a plurality of videos respectively corresponding to a plurality of regions using the cropping function. Accordingly, it is possible to reduce the number of electronic devices in a system.

PTL 1 discloses changing display of an object frame when a trimming frame indicating a trimming region of an input image is displayed.

### [Citation List]

### [Patent Literature]

[PTL 1] Japanese Patent Laid-Open No. 2013-153376

### [Summary of Invention]

### [Technical Problem]

As described above, in a system of the related art that performs video delivery, a user of an electronic device can ascertain whether a video output from the electronic device is a PGM output video by checking a tally lamp. However, when the electronic device outputs a plurality of videos respectively corresponding to a plurality of regions, the user cannot ascertain that which of the plurality of videos is the PGM output video.

The present invention provides a technique to enable a user to ascertain that which of a plurality of videos is a PGM output video when an electronic device outputs a plurality of videos respectively corresponding to a plurality of regions.

### [Solution to Problem]

An electronic device according to the present invention includes an acquisition unit configured to acquire an input video, an output unit configured to output a plurality of output videos respectively corresponding to a plurality of regions in the input video, a reception unit configured to receive a tally signal for at least one of the plurality of output videos, and a control unit configured to perform control such that a display video that is a video based on the input video and is a video in which the plurality of regions is identifiable is displayed, wherein the control unit performs control such that it is identifiable in the display video which of the plurality of regions the received tally signal corresponds to.

### [Advantageous Effects of Invention]

According to the present invention, when an electronic device outputs a plurality of videos respectively corresponding to a plurality of regions, a user can ascertain that which of the plurality of videos is a PGM output video.

### [Brief Description of Drawings]

[Fig. 1]

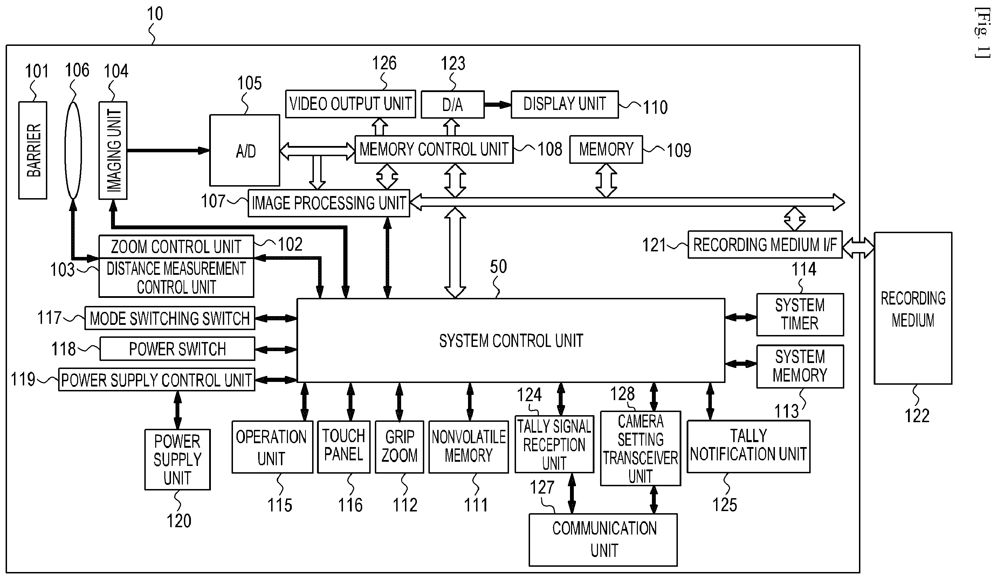

   Fig. 1 is a block diagram illustrating a configuration of a camera according to a first embodiment.
[Fig. 2]

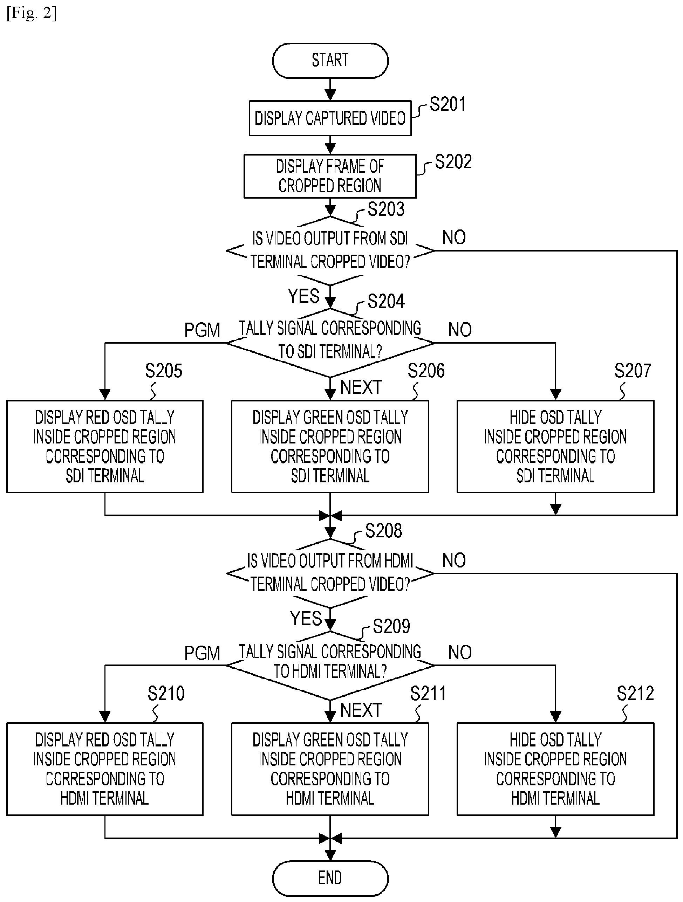

   Fig. 2 is a flowchart illustrating a process of a camera according to the first embodiment.
[Fig. 3]

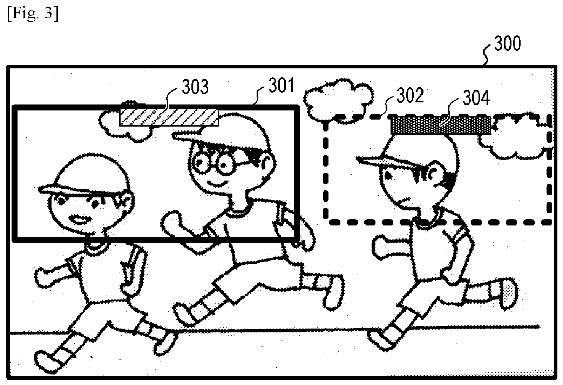

   Fig. 3 is a view illustrating a display video according to the first embodiment.
[Fig. 4]

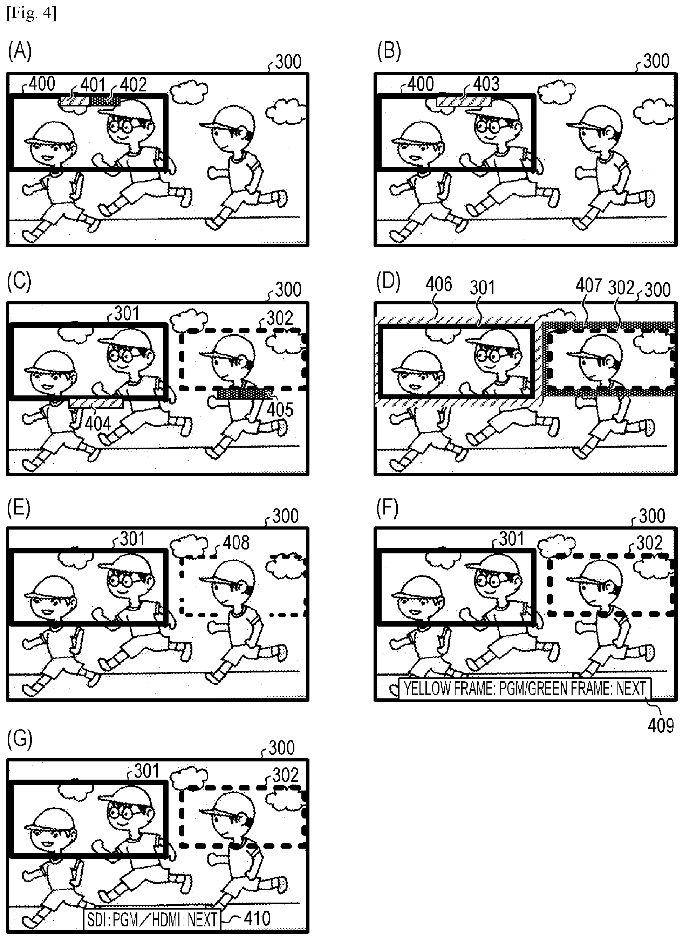

   Figs. 4A to 4G are diagrams illustrating modifications of a display video.
[Fig. 5]

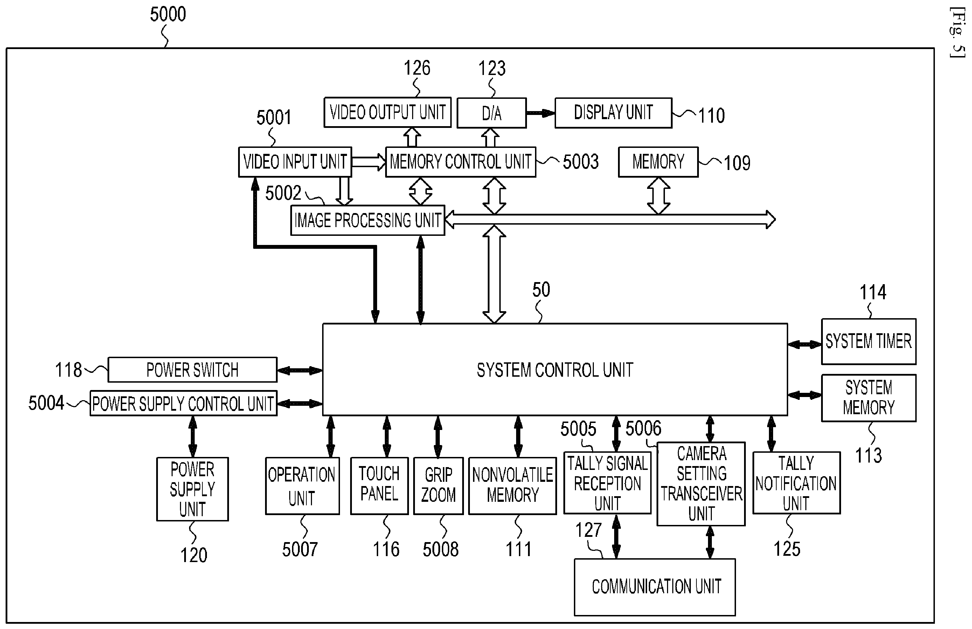

   Fig. 5 is a block diagram illustrating a configuration of a controller according to a second embodiment.
[Fig. 6]

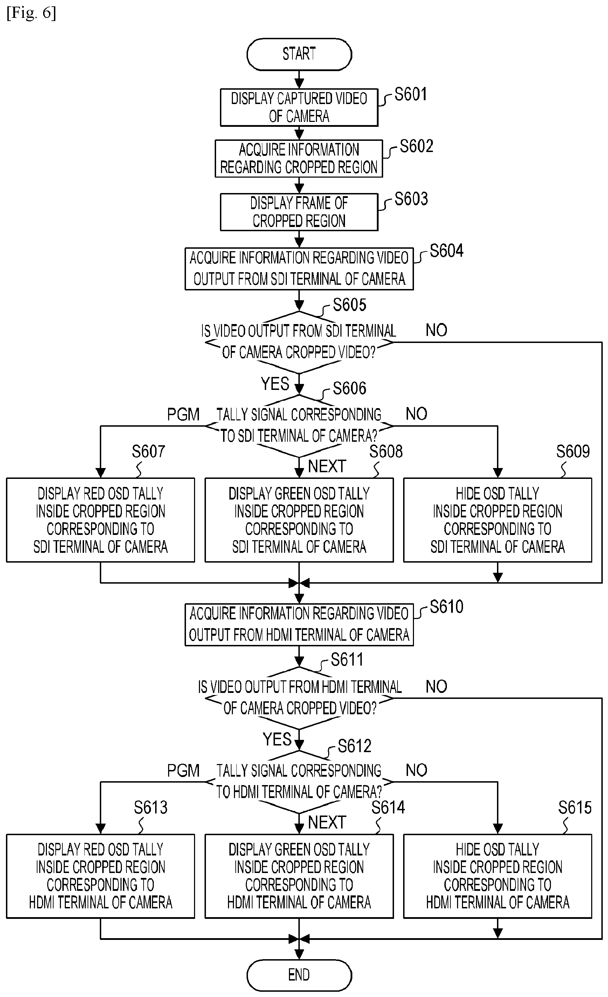

   Fig. 6 is a flowchart illustrating a process of a controller according to the second embodiment.
[Fig. 7]

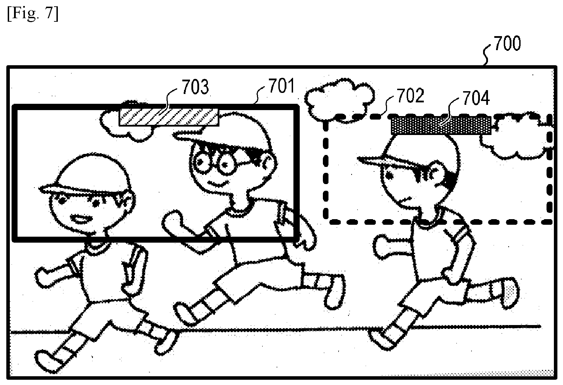

   Fig. 7 is a view illustrating a display video according to the second embodiment.

### [Description of Embodiments]

### <First Embodiment>

Hereinafter, a first embodiment of the present invention will be described with reference to the drawings.

In the first embodiment, a plurality of regions in a captured video are set as a plurality of cropped regions. A video corresponding to an entire region of the captured video is referred to as an "entire video", and a video corresponding to a cropped region is described as a "cropped video". A video output from an external device such as a switcher is described as a "PGM output video", and a video to be output subsequently from the external device is described as a "NEXT output video".

In a first embodiment, a digital video camera 10 (hereinafter described as "camera 10") that receives a tally signal from an external device will be described. When the camera 10 outputs a plurality of videos respectively corresponding to a plurality of regions, the camera 10 allows a user to ascertain, for example, that which of the plurality of videos is the PGM output video.

Fig. 1 is a block diagram illustrating a configuration of the camera 10.

An imaging lens 106 is a lens group that includes a zoom lens and a focus lens. The zoom lens is a lens for changing a zoom magnification by changing a focal length. The zoom lens is controlled by a zoom control unit 102. The focus lens is a lens for performing focusing. The focus lens is controlled by a distance measurement control unit 103.

The imaging unit 104 is an imaging element (image sensor) including a CCD, a CMOS element, or the like that converts an optical image into an electrical signal. The A/D converter 105 converts an analog signal output from the imaging unit 104 into a digital signal. A barrier 101 covers an imaging system (a portion including the imaging lens 106 and the like) of the camera 10 to prevent contamination and damage of the imaging system.

An image processing unit 107 performs predetermined image processing (for example, a resizing process such as pixel interpolation and reduction, a color conversion process, or the like) on image data from the A/D converter 105 or image data from a memory control unit 108. The image processing unit 107 performs a predetermined calculation process using captured image data, and a system control unit 50 performs exposure control and distance measurement control based on the calculation result obtained by the image processing unit 107. Accordingly, autofocus (AF) processing, auto exposure (AE) processing, and flash preliminary emission (EF) processing of a through the lens (TTL) method are performed. The image processing unit 107 further performs the predetermined calculation process using captured image data, and performs TTL automatic white balance (AWB) processing based on an obtained calculation result.

The image data from the A/D converter 105 is written on the memory 109 via the image processing unit 107 and the memory control unit 108 or via the memory control unit 108. In the memory 109, for example, image data obtained by the imaging unit 104 and converted into digital data by the A/D converter 105 is stored for various processes. The memory 109 has a storage capacity sufficient to store a predetermined number of still images, a moving image for a predetermined time, and a sound. The memory 109 also serves as a memory (video memory) for image display. Image data to be displayed on the display unit 110 is also stored in the memory 109. The display unit 110 displays, for example, image data obtained by the imaging unit 104 and converted into digital data by the A/D converter 105, image data read from the recording medium 122, and the like. A frame indicating the cropped region and on screen display (OSD) data such as an OSD tally for notifying of reception of a tally signal may be displayed on the display unit 110.

The D/A converter 123 converts the image data for display stored in the memory 109 into an analog signal and supplies the converted analog signal to the display unit 110. Accordingly, the image data for display written on the memory 109 is displayed by the display unit 110 via the D/A converter 123. The display unit 110 is a display such as a liquid crystal display (LCD) and performs display in accordance with an analog signal from the D/A converter 123. The digital signal A/D converted by the A/D converter 105 and accumulated in the memory 109 is converted into an analog signal by the D/A converter 123 to be sequentially transferred to the display unit 110 and displayed. Accordingly, a live view image is displayed, and a function as an electronic viewfinder is realized. The display unit 110 may be an organic electroluminescence (EL) display or the like.

A video output unit 126 reads the image data accumulated in the memory 109 via the memory control unit 108, converts the image data into a video signal, and outputs the converted video signal to the outside. In the first embodiment, the video output unit 126 includes a serial digital interface (SDI) terminal and a high definition multimedia interface (HDMI that is registered trademark) terminal. The video output unit 126 converts the format of a video into a format compatible with an SDI terminal and outputs the video from the SDI terminal, or converts the format of the video into a format compatible with the HDMI terminal and outputs the video from the HDMI terminal. The number of terminals is not particularly limited. The video output unit 126 can also extract (cut out and crop) the cropped region from the image and output image data of the cropped region.

A nonvolatile memory 111 is an electrically erasable/recordable memory and is, for example, an EEPROM. The nonvolatile memory 111 stores a constant, a program, and the like for an operation of the system control unit 50. The program is a program executing various flowcharts to be described below.

The system control unit 50 controls the entire camera 10. The system control unit 50 realizes each process to be described below by executing the program stored in the nonvolatile memory 111. The system control unit 50 also performs display control by controlling the memory 109, the D/A converter 123, the display unit 110, and the like.

The system memory 113 is, for example, a RAM. The system memory 113 stores constants and variables for operations of the system control unit 50, a program read from the nonvolatile memory 111, and the like. A system timer 114 is a time measurement unit that measures a time used for various types of control and a time of an embedded clock.

The operation unit 115 is used to input various operation instructions (various instructions from the user) to the system control unit 50. The system control unit 50 performs various processes in response to instructions input from the user via the operation unit 115. The operation unit 115 includes various buttons such as a menu button, a cancellation button, four-direction keys (up, down, left, and right keys), a SET key, and an AF/MF key. For example, when the menu button is pressed, a menu screen on which various settings can be made is displayed on the display unit 110. The user can intuitively perform various settings by using the menu screen displayed on the display unit 110, the four-direction keys, and the SET key. The user can set one or more cropped regions for the image data stored in the memory 109, and can also individually change a position and a size of the one or more cropped regions. The user can also switch the regions of the video output from the video output unit 126.

The touch panel 116 is a touch sensor that detects various touch operations on a display surface of the display unit 110 (an operation surface of the touch panel 116). The touch panel 116 and the display unit 110 can be integrated. For example, the touch panel 116 is configured such that transmittance of light does not disturb display of the display unit 110, and is attached to an upper layer of the display surface of the display unit 110. Then, input coordinates on the touch panel 116 are associated with display coordinates on the display surface of the display unit 110. Accordingly, it is possible to provide a graphical user interface (GUI) as if the user can directly operate the screen displayed on the display unit 110.

A mode switching switch 117 switches the operation mode of the system control unit 50 to one of a moving image recording mode, a reproduction mode, and the like.

A power switch 118 is a push button for switching on and off the power of the camera 10.

A grip zoom 112 is a seesaw push button. The system control unit 50 detects a pressing amount (operation amount) of the grip zoom 112 when the grip zoom 112 is pressed from a reference position, and changes a zoom magnification at a zoom speed corresponding to the detected pressing amount. The system control unit 50 changes the zoom magnification by changing a position of the imaging lens 106 (zoom lens) via the zoom control unit 102. In the first embodiment, it is assumed that an output voltage of the grip zoom 112 is changed by a larger change amount as the pressing amount of the grip zoom 112 increases. Accordingly, the system control unit 50 can detect the pressing amount of the grip zoom 112 by detecting the output voltage of the grip zoom 112.

A power supply control unit 119 includes a battery detection circuit, a DC-DC converter, a switch circuit switching a block to be electrified, and the like, and detects whether a battery is mounted, a type of battery, and a remaining battery level. The power supply control unit 119 controls the DC-DC converter based on a detection result and an instruction of the system control unit 50, and supplies a necessary voltage to each unit including the recording medium 122 for a necessary period. A power supply unit 120 includes a primary battery such as an alkaline battery and a lithium battery, a secondary battery such as a NiCd battery, a NiMH battery, and a Li battery, and an AC adapter.

The recording medium I/F 121 is an interface with the recording medium 122 such as a memory card and a hard disk. The recording medium 122 is a recording medium for recording captured image data, and includes a semiconductor memory and a magnetic disk.

A tally signal reception unit 124 receives a tally signal from the outside via a communication unit 127. In the first embodiment, the tally signal corresponds to (indicates one of a plurality of states) one of a plurality of states of an output video (a video output from the video output unit 126), such as a PGM output video or a NEXT output video. The tally signal reception unit 124 can receive the same number of tally signals as the number of terminals included in the video output unit 126. When the video output unit 126 outputs a plurality of output videos (for example, a plurality of output videos respectively corresponding to a plurality of cropped regions), the tally signal reception unit 124 receives a tally signal for at least one of the plurality of output videos. The tally signal corresponding to the output video can also be regarded as a tally signal corresponding to the cropped region and a tally signal corresponding to the terminal of the video output unit 126. In the first embodiment, it is assumed that the tally signal reception unit 124 receives a tally signal from an external device such as a switcher via the communication unit 127. The external device that outputs the tally signal and a method of receiving the tally signal are not particularly limited as long as a terminal (output video) corresponding to the tally signal and a state can be determined.

The camera setting transceiver unit 128 transmits and receives setting information of the camera 10 from the outside via the communication unit 127. Accordingly, various settings can be made without using the operation unit 115.

The communication unit 127 communicates with the outside. In the first embodiment, it is assumed that the communication unit 127 performs wired communication with an external device connected to the camera 10 via a cable. The communication unit 127 may perform wireless communication via an antenna.

A tally notification unit 125 transmits a tally signal received by the tally signal reception unit 124. For example, the tally notification unit 125 outputs a tally signal to the external device. When the external device is a tally lamp (LED light), the tally notification unit 125 turns on the tally lamp by outputting a tally signal to the tally lamp. For example, when only a tally signal corresponding to the PGM output video is received, the tally notification unit 125 outputs the tally signal to the tally lamp to turn on the tally lamp in red. When only the tally signal corresponding to the NEXT output video is received, the tally notification unit 125 outputs a tally signal to the tally lamp to turn on the tally lamp in green. When a tally signal corresponding to the PGM output video and a tally signal corresponding to the NEXT output video are received, the tally notification unit 125 turns on the tally lamp in red by outputting only the tally signal corresponding to the PGM output video (specific state) to the tally lamp. The external device is not limited to the tally lamp. The tally lamp may be a part of the camera 10 instead of an external device. The tally notification unit 125 may turn on a terminal (output video) and a state corresponding to the received tally signal in an identifiable manner.

Fig. 2 is a flowchart illustrating a process of the camera 10. The process of Fig. 2 is realized by the system control unit 50 by loading a program stored in the nonvolatile memory 111 in the system memory 113 and executing the program. The process of Fig. 2 is performed at a display update timing of the display unit 110, for example, after the camera 10 is powered on by the user operating the power switch 118. When a refresh rate of the display unit 110 is 60 Hz, the process of Fig. 2 is performed sixty times per second.

In S201, the system control unit 50 acquires a captured video (input video) from the imaging unit 104 (specifically, the A/D converter 105), the recording medium 122, or the like and displays the captured video (entire video) on the display unit 110. A region including all the cropped regions may be displayed, and a partial region of the captured video (an input video or an entire video) may be displayed.

In S202, the system control unit 50 displays a frame (item) indicating the cropped region on the display unit 110. For example, the system control unit 50 sets a plurality of cropped regions for the captured video in response to an instruction from the user. Then, the system control unit 50 displays a plurality of frames (a plurality of items) indicating a plurality of cropped regions on the display unit 110 so that the plurality of frames are superimposed on the captured video (entire video). Accordingly, a display video that is a video based on the captured video (entire video) and is a video in which the plurality of cropped regions can be identified is displayed on the display unit 110. A method of enabling the cropped regions to be identified is not particularly limited. For example, the cropped regions may be identified by coloring the cropped regions.

In S203, the system control unit 50 determines whether a video (SDI output video) output from the SDI terminal is the cropped video. When the SDI output video is the cropped video, the process proceeds to S204. Otherwise (when the SDI output video is the entire video or the video is not output from the SDI terminal), the process proceeds to S208.

In S204, the system control unit 50 determines (confirms) a tally signal corresponding to the SDI terminal (SDI output video). When the tally signal corresponding to the PGM output video (the tally signal indicating that the SDI output video is the PGM output video) is received, the process proceeds to S205. When the tally signal corresponding to the NEXT output video (the tally signal indicating that the SDI output video is the NEXT output video) is received, the process proceeds to S206. When the tally signal corresponding to the SDI terminal (SDI output video) is not received, the process proceeds to S207.

In S205, the system control unit 50 displays a red OSD tally (predetermined item) inside the cropped region corresponding to the SDI output video. For example, the system control unit 50 displays the red OSD tally inscribed in the frame of the cropped region corresponding to the SDI output video.

In S206, the system control unit 50 displays a green OSD tally (predetermined item) inside the cropped region corresponding to the SDI output video. For example, the system control unit 50 displays the green OSD tally inscribed in the frame of the cropped region corresponding to the SDI output video.

In S207, the system control unit 50 hides the OSD tally inside the cropped region corresponding to the SDI output video.

In S208, the system control unit 50 determines whether the video (HDMI output video) output from the HDMI terminal is a cropped video. When the HDMI output video is the cropped video, the process proceeds to S209. When the HDMI output video is not the cropped video (when the HDMI output video is the entire video or when the video is not output from the HDMI terminal), the process in Fig. 2 ends.

In S209, the system control unit 50 determines (confirms) a tally signal corresponding to the HDMI terminal (HDMI output video). When the tally signal corresponding to the PGM output video (a tally signal indicating that the HDMI output video is the PGM output video) is received, the process proceeds to S210. When the tally signal corresponding to the NEXT output video (the tally signal indicating that the HDMI output video is the NEXT output video) is received, the process proceeds to S211. When the tally signal corresponding to the HDMI terminal (HDMI output video) is not received, the process proceeds to S212.

In S210, the system control unit 50 displays a red OSD tally (predetermined item) inside the cropped region corresponding to the HDMI output video. For example, the system control unit 50 displays the red OSD tally inscribed in the frame of the cropped region corresponding to the HDMI output video.

In S211, the system control unit 50 displays a green OSD tally (predetermined item) inside the cropped region corresponding to the HDMI output video. For example, the system control unit 50 displays the green OSD tally inscribed in the frame of the cropped region corresponding to the HDMI output video.

In S212, the system control unit 50 hides the OSD tally inside the cropped region corresponding to the HDMI output video.

Fig. 3 is a diagram illustrating an example of a display video. In Fig. 3, a yellow frame 301 indicating a region (cropped region) of the SDI output video and a green frame 302 indicating a region (cropped region) of the HDMI output video are displayed so that these frames are superimposed on the captured video 300. Three or more cropped regions may be set and three or more frames may be displayed. In Fig. 3, the SDI output video is selected as the PGM output video, and the HDMI output video is selected as the NEXT output video. Therefore, a red OSD tally 303 inscribed in a yellow frame 301 indicating the region of the SDI output video is displayed, and a green OSD tally 304 inscribed in a green frame 302 indicating the region of the HDMI output video is displayed. The color of the frame and the color of the OSD tally are not particularly limited.

As described above, according to the first embodiment, it is identifiable in the display video which of the plurality of regions in the input video the received tally signal corresponds to. Accordingly, when the electronic device outputs a plurality of videos respectively corresponding to the plurality of regions, the user can ascertain that which of the plurality of videos video is the PGM output video.

The video output unit 126 may be capable of outputting two or more output videos corresponding to the same one region. When two or more output videos corresponding to one region are output, a plurality of tally signals corresponding to the one region may be received. For example, a tally signal corresponding to the PGM output video and a tally signal corresponding to the NEXT output video may be received as a tally signal corresponding to the one region. In that case, the system control unit 50 may display an item indicating all of the states corresponding to the plurality of tally signals of the one region in association with the one region. In Fig. 4A, for the cropped region indicated by frame 400, the tally signal corresponding to the PGM output video and the tally signal corresponding to the NEXT output video are received. Therefore, a red OSD tally 401 and a green OSD tally 402 inscribed in a frame 400 and displayed. The region of the frame 400 is not only an SDI output video region but also an HDMI output video region.

When a plurality of tally signals corresponding to one region are received and one of the plurality of tally signals corresponds to the PGM output video (specific state), the system control unit 50 may display only an item indicating the PGM output video in association with the one region. In Fig. 4B, for the cropped region indicated by frame 400, the tally signal corresponding to the PGM output video and the tally signal corresponding to the NEXT output video are received. Therefore, only the red OSD tally 403 inscribed in the frame 400 is displayed. The region of the frame 400 is not only an SDI output video region but also an HDMI output video region.

In the first embodiment, the OSD tally is displayed inside the cropped region, but the system control unit 50 may display the OSD tally around the cropped region where the tally signal is received. For example, the system control unit 50 may display the OSD tally circumscribed in the frame of the cropped region for which the tally signal is received. In Fig. 4C, the SDI output video is selected as the PGM output video, and the HDMI output video is selected as the NEXT output video. Therefore, the red OSD tally 404 inscribed in the frame 301 indicating the region of the SDI output video is displayed, and the green OSD tally 405 inscribed in the frame 302 indicating the region of the HDMI output video is displayed.

The system control unit 50 may display, as the OSD tally, a border line surrounding a frame of the region for which the tally signal is received. In Fig. 4D, the SDI output video is selected as the PGM output video, and the HDMI output video is selected as the NEXT output video. Therefore, the frame 301 indicating the region of the SDI output video is surrounded by a red OSD tally 406 (border line), and the frame 302 indicating the region of the HDMI output video is surrounded by a green OSD tally 405 (border line).

In response to the reception of the tally signal, the system control unit 50 may change one identification mode (identification method) of the cropped region for which the tally signal is received and the cropped region for which the tally signal is not received. For example, in response to the reception of the tally signal, the system control unit 50 changes one mode of the frame of the cropped region for which the tally signal is received and the frame of the cropped region for which the tally signal is not received. In Fig. 4E, the SDI output video is selected as the PGM output video, and the HDMI output video is selected as the NEXT output video. Therefore, the frame indicating the region of the HDMI output video is changed from the frame 302 to a frame 408 having lower conspicuity (saliency) than the frame 301 indicating the region of the SDI output video. The conspicuity may be regarded as the degree of prominence or visibility. The system control unit 50 may enhance the conspicuity of the frame by emphasizing the frame indicating the region of the PGM output video. In that case, the system control unit 50 may not reduce the conspicuity of the frame indicating the region of the NEXT output video.

The system control unit 50 may display a character string indicating the cropped region for which the tally signal is received at a position not superimposed on the plurality of cropped regions. When various items such as a character string are displayed at positions not superimposed on the plurality of cropped regions, a decrease in visibility of the cropped region due to the item can be curbed. In Fig. 4F, an OSD 409 (item) including a character string indicating the frame of the cropped region for which the tally signal is received is displayed. A character string of the OSD 409 indicates that a tally signal corresponding to the PGM output video is received for the yellow frame 301, and a tally signal corresponding to the NEXT output video is received for the green frame 302. In Fig. 4G, an OSD 410 (item) including a character string indicating a terminal (a terminal of the video output unit 126) for which the tally signal is received is displayed. The character string of the OSD 410 indicates that a tally signal corresponding to the PGM output video is received for the SDI terminal and a tally signal corresponding to the NEXT output video is received for the HDMI terminal.

In the first embodiment, the tally signal is received through communication with the outside, but a method of receiving the tally signal is not limited thereto. For example, the tally signal may be received by at least one of a plurality of input terminals respectively corresponding to the plurality of terminals of the video output unit 126. An input terminal is, for example, a contact input terminal that receives an ON or OFF binary voltage from the outside. When only the tally signal corresponding to the PGM output video is received, one input terminal may be provided for each terminal of the video output unit 126. When two input terminals are provided for each terminal of the video output unit 126, the tally signal corresponding to the PGM output video and the tally signal corresponding to the NEXT output video can be received in an identifiable manner. One of the two input terminals corresponding to one terminal of the video output unit 126 is an input terminal that receives the tally signal corresponding to the PGM output video, and the other of the two input terminals is an input terminal that receives the tally signal corresponding to the NEXT output video.

When one input terminal (first input terminal) is provided for each terminal of the video output unit 126, one input terminal (second input terminal) not related to the video output unit 126 may be further provided. By receiving the tally signal using the plurality of first input terminals, it is identifiable which of the plurality of terminals of the video output unit 126 the received tally signal corresponds to. When a tally signal corresponding to a specific state (a PGM output video or a NEXT output video) is received, the second input terminal receives a predetermined signal. Accordingly, it is possible to determine whether the tally signal corresponding to the specific state is received by fewer input terminals than in a configuration in which two input terminals are provided for each terminal of the video output unit 126.

### <Second Embodiment>

Hereinafter, a second embodiment of the present invention will be described with reference to the drawings. Hereinafter, the same description as that of the first embodiment (for example, the description about the same configuration and processes as those of the first embodiment) will be omitted, and differences from the first embodiment will be described.

In the second embodiment, a controller 5000 of a camera (first external device) will be described. The controller 5000 receives a tally signal corresponding to a video output from the camera to an external device (second external device) such as a switcher from the second external device. When the camera outputs a plurality of videos respectively corresponding to a plurality of regions, the controller 5000 allows the user to ascertain that which of the plurality of videos is the PGM output video. The controller 5000 may output the video to an external device such as a switcher instead of outputting the video from the camera to the external device such as a switcher.

Fig. 5 is a block diagram illustrating an example of a configuration of the controller 5000. In Fig. 5, the same constituents as those of the first embodiment (Fig. 1) are denoted by the same reference numerals as those of the first embodiment.

A video input unit 5001 receives a video signal from the outside. In the second embodiment, it is assumed that the camera has two SDI terminals and one HDMI terminal, the video input unit 5001 has an SDI terminal, and the SDI terminal of the video input unit 5001 is connected to an SDI terminal of the camera. It is assumed that video input unit 5001 receives (acquires) an entire video from the camera.

An image processing unit 5002 performs predetermined image processing (a resizing process such as pixel interpolation and reduction, a color conversion process, or the like) on image data from the video input unit 5001 or image data from a memory control unit 5003.

The image data from the video input unit 5001 is written on the memory 109 via the image processing unit 5002 and the memory control unit 5003 or via the memory control unit 5003.

The operation unit 5007 is used to input various operation instructions (various instructions from the user) to the system control unit 50. The system control unit 50 performs various processes in response to instructions input from the user via the operation unit 5007. The operation unit 5007 includes various buttons such as a menu button, a cancellation button, four-direction keys (up, down, left, and right keys), and a SET key. For example, when the menu button is pressed, a menu screen on which various settings can be made is displayed on the display unit 110. The user can intuitively perform various settings by using the menu screen displayed on the display unit 110, the four-direction keys, and the SET key. The user can set one or more cropped regions for the image data stored in the memory 109, and can also individually change a position and a size of the one or more cropped regions. The set position and size of the cropped region are transmitted from a camera setting transceiver unit 5006 to be described below to the camera. The present invention is not limited to the position and size of the cropped region, various settings related to the camera may be made by transmitting and receiving setting information of the camera.

A grip zoom 5008 is a seesaw push button. The system control unit 50 detects a pressing amount (operation amount) of the grip zoom 5008 when the grip zoom 5008 is pressed from a reference position, and changes a zoom magnification of the camera at a zoom speed corresponding to the detected pressing amount. The system control unit 50 changes the zoom magnification of the camera by transmitting setting information from the camera setting transceiver unit 5006 to the camera. In the second embodiment, it is assumed that an output voltage of the grip zoom 5008 is changed by a larger change amount as the pressing amount of the grip zoom 5008 increases. Accordingly, the system control unit 50 can detect the pressing amount of the grip zoom 5008 by detecting the output voltage of the grip zoom 5008.

The power supply control unit 5004 includes a battery detection circuit, a DC-DC converter, a switch circuit switching a block to be electrified, and the like, and detects whether a battery is mounted, a type of the battery, and a remaining battery level.

A tally signal reception unit 5005 receives a tally signal from the outside via the communication unit 127. In the second embodiment, the tally signal corresponds to one of a plurality of states of an output video of the camera, such as a PGM output video or a NEXT output video (indicating one of the plurality of states). The tally signal reception unit 5005 can receive the same number of tally signals as output videos of the camera. In the second embodiment, it is assumed that the tally signal reception unit 5005 receives a tally signal from an external device such as a switcher via the communication unit 127. The external device that outputs the tally signal and a method of receiving the tally signal are not particularly limited as long as an output video and a state corresponding to the tally signal can be determined.

The camera setting transceiver unit 5006 transmits or receives camera setting information via the communication unit 127. For example, the position and size of a cropped region, selection information of the video output from the camera, a zoom speed of the camera, setting information regarding AF, and the like can be transmitted and received.

Fig. 6 is a flowchart illustrating a process of the controller 5000. The process of Fig. 6 is realized by the system control unit 50 by developing a program stored in the nonvolatile memory 111 in the system memory 113 and executing the program. The process of Fig. 6 is performed at the display update timing of the display unit 110, for example, after the controller 5000 is powered on by the user operating the power switch 118. When a refresh rate of the display unit 110 is 60 Hz, the process of Fig. 6 is performed sixty times per second.

In S601, the system control unit 50 acquires a captured video (entire video) from the camera using the video input unit 5001, and displays the captured video (entire video) on the display unit 110. A region including all the cropped regions may be displayed, and a partial region of the captured video (entire video) may be displayed.

In S602, the system control unit 50 received (acquired) setting information regarding the cropped region from the camera using the camera setting transceiver unit 5006. The setting information of the cropped region indicates, for example, the position and a size of the cropped region.

In S603, the system control unit 50 displays a frame (item) indicating the cropped region on the display unit 110 based on the setting information acquired in S602. Accordingly, a display video that is a video based on the captured video (entire video) and is a video in which the plurality of cropped regions can be identified is displayed on the display unit 110.

In S604, the system control unit 50 receives (acquires) setting information regarding a video (SDI output video) output from the SDI terminal of the camera using the camera setting transceiver unit 5006. The setting information regarding the SDI output video indicates whether the SDI output video is a cropped video, and indicates a cropped region or a frame corresponding to the SDI output video when the SDI output video is the cropped video.

In S605, the system control unit 50 determines whether the video (SDI output video) output from the SDI terminal of the camera is the cropped video. When the SDI output video is the cropped video, the process proceeds to S606. When the SDI output video is not the cropped video (when the SDI output video is the entire video or the video is not output from the SDI terminal), the process proceeds to S610.

In S606, the system control unit 50 determines (confirms) the tally signal corresponding to the SDI terminal (SDI output video) of the camera. When the tally signal corresponding to the PGM output video (the tally signal indicating that the SDI output video is the PGM output video) is received, the process proceeds to S607. When the tally signal corresponding to the NEXT output video (the tally signal indicating that the SDI output video is the NEXT output video) is received, the process proceeds to S608. When the tally signal corresponding to the SDI terminal (SDI output video) is not received, the process proceeds to S609.

S607 to S609 are the same as S205 to S207 of the first embodiment (Fig. 2).

In S610, the system control unit 50 receives (acquires) the setting information regarding the video (HDMI output video) output from the HDMI terminal of the camera using the camera setting transceiver unit 5006. The setting information regarding the HDMI output video indicates whether the HDMI output video is a cropped video. When the HDMI output video is the cropped video, the setting information indicates a cropped region or a frame corresponding to the HDMI output video.

In S611, the system control unit 50 determines whether the video (HDMI output video) output from the HDMI terminal of the camera is the cropped video. When the HDMI output video is the cropped video, the process proceeds to S612. Otherwise (when the HDMI output video is the entire video or the video is not output from the HDMI terminal), the process of Fig. 6 ends.

In S612, the system control unit 50 determines (confirms) the tally signal corresponding to the HDMI terminal (HDMI output video). When the tally signal corresponding to the PGM output video (the tally signal indicating that the HDMI output video is the PGM output video) is received, the process proceeds to S613. When the tally signal corresponding to the NEXT output video (the tally signal indicating that the HDMI output video is the NEXT output video) is received, the process proceeds to S614. When the tally signal corresponding to the HDMI terminal (HDMI output video) is not received, the process proceeds to S615.

S613 to S615 are the same as S210 to S212 of the first embodiment (Fig. 2).

Fig. 7 is a diagram illustrating an example of a display video. In Fig. 7, a yellow frame 701 indicating a region (cropped region) of the SDI output video of the camera and a green frame 702 indicating a region (cropped region) of the HDMI output video of the camera are displayed so that these frames are superimposed on the captured video 700 acquired from the camera. Three or more cropped regions may be set and three or more frames may be displayed. In Fig. 7, the SDI output video is selected as the PGM output video and the HDMI output video is selected as the NEXT output video. Therefore, a red OSD tally 703 inscribed in a yellow frame 701 indicating the region of the SDI output video is displayed, and a green OSD tally 704 inscribed in a green frame 702 indicating the region of the HDMI output video is displayed. The color of the frame and the color of the OSD tally are not particularly limited.

As described above, according to the second embodiment, when the electronic device outputs a plurality of videos respectively corresponding to a plurality of regions through the process of the controller, the user can ascertain that which of the plurality of videos is the PGM output video.

In the second embodiment, the controller displays a crop frame to be superimposed on the captured video (entire video) based on the setting information of the crop frame, but the present disclosure is not limited thereto. For example, the camera may generate a combined video in which a crop frame is superimposed on the captured video, and the controller may acquire and display the combined video from the camera and display an OSD tally superimposed on the combined video. In the second embodiment, the controller receives the tally signal from the switcher, but the present invention is not limited thereto. The camera may transfer a tally signal to the controller. In this way, the camera and the controller may appropriately share the process.

The above-described various types of control described as being performed by the system control unit 50 may be performed by at least one piece of hardware (for example, at least one processor and/or at least one circuit). One piece of hardware may control the entire device, or a plurality of pieces of hardware may share a process to control the entire device.

Although the embodiments of the present invention are described in detail, the present invention is not limited by these specific embodiments. Various forms in the range without departing from the gist of the invention shall also be encompassed by the present invention. Each of the above-described embodiments merely illustrates an embodiment of the present invention, and the embodiments can be combined as necessary.

In the above-described embodiment, the case where the present invention is applied to the imaging device (digital camera) or the controller has been described as an example, but the present invention is not limited to the imaging device and the controller, and can be applied to any electronic device capable of receiving a tally signal. For example, the present invention is applicable to a personal computer, a PDA, a mobile phone terminal, a portable image viewer, a printer apparatus, a digital photo frame, a music player, a game console, and an electronic book reader. The present invention is also applicable to a video player, a display device (including a projection device), a tablet terminal, a smartphone, an AI speaker, a home appliance, and an in-vehicle device.

### <Other embodiments>

The present invention can also be realized by supplying a program for realizing one or more of the functions of the embodiment described above to a system or a device via a network or a storage medium and having one or more processors in a computer of the system or the device read and execute the program. Further, the present invention can also be realized by a circuit (an ASIC, for example) for realizing one or more functions.

The disclosure of the present embodiment includes the following configurations, methods, a program and a medium.

### (Configuration 1)

An electronic device comprising:
an acquisition unit configured to acquire an input video;
an output unit configured to output a plurality of output videos respectively corresponding to a plurality of regions in the input video;
a reception unit configured to receive a tally signal for at least one of the plurality of output videos; and
a control unit configured to perform control such that a display video that is a video based on the input video and is a video in which the plurality of regions is identifiable is displayed,
wherein the control unit performs control such that it is identifiable in the display video which of the plurality of regions the received tally signal corresponds to.

### (Configuration 2)

The electronic device according to configuration 1,
wherein the control unit performs control such that a predetermined item is displayed inside a region for which the tally signal is received among the plurality of regions.

### (Configuration 3)

The electronic device according to configuration 2,
wherein the display video includes a plurality of items respectively indicating the plurality of regions, and
wherein the control unit performs control such that the predetermined item is inscribed and displayed in an item of a region for which the tally signal is received among the plurality of items.

### (Configuration 4)

The electronic device according to configuration 1,
wherein the control unit performs control such that a predetermined item is displayed around a region for which the tally signal is received among the plurality of regions.

### (Configuration 5)

The electronic device according to configuration 4,
wherein the display video includes a plurality of items respectively indicating the plurality of regions, and
wherein the control unit performs control such that the predetermined item is circumscribed and displayed in an item of a region for which the tally signal is received among the plurality of items.

### (Configuration 6)

The electronic device according to configuration 1,
wherein, in response to the reception of the tally signal, the control unit performs control such that an identification mode of one of a region for which the tally signal is received and a region for which the tally signal is not received among the plurality of regions is changed.

### (Configuration 7)

The electronic device according to configuration 6,
wherein the display video includes a plurality of items respectively indicating the plurality of regions, and
wherein, in response to the reception of the tally signal, the control unit performs control such that a mode of one of an item of a region for which the tally signal is received and an item of a region for which the tally signal is not received among the plurality of items is changed.

### (Configuration 8)

The electronic device according to configuration 1,
wherein the display video includes a plurality of items respectively indicating the plurality of regions, and
wherein the control unit performs control such that a border line surrounding an item of a region for which the tally signal is received among the plurality of items is displayed.

### (Configuration 9)

The electronic device according to configuration 1,
wherein the control unit performs control such that a character string indicating a region for which the tally signal is received is displayed at a position not superimposed on the plurality of regions.

### (Configuration 10)

The electronic device according to configuration 9,
wherein the display video includes a plurality of items respectively indicating the plurality of regions, and
wherein the character string indicates an item of a region for which the tally signal is received among the plurality of items.

### (Configuration 11)

The electronic device according to configuration 9,
wherein the output unit outputs the plurality of output videos from a plurality of terminals, respectively, and
wherein the character string indicates a terminal of an output video for which the tally signal is received among the plurality of terminals.

### (Configuration 12)

The electronic device according to configuration 1,
wherein the tally signal corresponds to one of a plurality of states,
wherein the output unit is capable of outputting two or more output videos corresponding to one region, and
wherein, in a case where a plurality of tally signals corresponding to one region is received, the control unit performs control such that an item indicating all of states corresponding to the plurality of tally signals is displayed in association with the one region.

### (Configuration 13)

The electronic device according to configuration 1,
wherein the tally signal corresponds to one of a plurality of states,
wherein the output unit is capable of outputting two or more output videos corresponding to one region, and
wherein, in a case where a plurality of tally signals corresponding to one region are received and one of the plurality of tally signals corresponds to a specific state, the control unit performs control such that only an item indicating the specific state is displayed in association with the one region.

### (Configuration 14)

The electronic device according to any one of configurations 1 to 13, further comprising
a second output unit configured to output the received tally signal to a tally lamp.

### (Configuration 15)

The electronic device according to any one of configurations 1 to 13, further comprising
a second output unit configured to output the received tally signal to an external device.

### (Configuration 16)

The electronic device according to configuration 14 or 15,
wherein the tally signal corresponds to one of a plurality of states, and
wherein, in a case where two or more tally signals respectively corresponding to two or more output videos are received and one of the two or more tally signals corresponds to a specific state, the second output unit outputs only the tally signal of the specific state among the two or more tally signals.

### (Configuration 17)

The electronic device according to any one of configurations 1 to 17,
wherein the reception unit receives the tally signal by communicating with outside.

### (Configuration 18)

The electronic device according to any one of configurations 1 to 17,
wherein the output unit outputs the plurality of output videos from a plurality of terminals, respectively, and
wherein the reception unit receives the tally signal in at least one of a plurality of input terminals respectively corresponding to the plurality of terminals.

### (Configuration 19)

The electronic device according to configuration 18,
wherein the tally signal corresponds to one of a plurality of states, and
wherein, in a case where the tally signal corresponding to a specific state is received in one of the plurality of input terminals, the reception unit further receives a predetermined signal in a second input terminal.

### (Configuration 20)

The electronic device according to any one of configurations 1 to 19, further comprising
an imaging unit configured to capture a video,
wherein the acquisition unit acquires a video captured by the imaging unit.

### (Configuration 21)

The electronic device according to any one of configurations 1 to 19,
wherein the acquisition unit acquires a video captured by an imaging device, and
wherein the output unit outputs a video to an external device connected to the electronic device.

### (Method 1)

A control method of an electronic device, comprising:
an acquisition step of acquiring an input video;
an output step of outputting a plurality of output videos respectively corresponding to a plurality of regions in the input video;
a reception step of receiving a tally signal for at least one of the plurality of output videos; and
a control step of performing control such that a display video that is a video based on the input video and is a video in which the plurality of regions is identifiable is displayed,
wherein in the control step, control is performed such that it is identifiable in the display video which of the plurality of regions the received tally signal corresponds to.

### (Program)

A program that causes a computer to function as each unit of the electronic device according to any one of configurations 1 to 22.

### (Medium)

A computer readable medium storing a program that causes a computer to function as each unit of the electronic device according to any one of configurations 1 to 22.

The present invention is not limited to the embodiment described above, and various modifications and amendments may be implemented thereon without departing from the spirit and scope of the present invention. Accordingly, the following claims are attached in order to publicize the scope of the present invention.

The present application claims priority on the basis of Japanese Patent Application No. 2022-200364, filed on December 15, 2022, and all of the contents disclosed therein are included by reference.

### [Reference Signs List]

- 10: Camera
- 5000: Controller
- 50: System control unit

## Claims

1. An electronic device comprising:
an acquisition unit configured to acquire an input video;
an output unit configured to output a plurality of output videos respectively corresponding to a plurality of regions in the input video;
a reception unit configured to receive a tally signal for at least one of the plurality of output videos; and
a control unit configured to perform control such that a display video that is a video based on the input video and is a video in which the plurality of regions is identifiable is displayed,
wherein the control unit performs control such that it is identifiable in the display video which of the plurality of regions the received tally signal corresponds to.

2. The electronic device according to claim 1,
wherein the control unit performs control such that a predetermined item is displayed inside a region for which the tally signal is received among the plurality of regions.

3. The electronic device according to claim 2,
wherein the display video includes a plurality of items respectively indicating the plurality of regions, and
wherein the control unit performs control such that the predetermined item is inscribed and displayed in an item of a region for which the tally signal is received among the plurality of items.

4. The electronic device according to claim 1,
wherein the control unit performs control such that a predetermined item is displayed around a region for which the tally signal is received among the plurality of regions.

5. The electronic device according to claim 4,
wherein the display video includes a plurality of items respectively indicating the plurality of regions, and
wherein the control unit performs control such that the predetermined item is circumscribed and displayed in an item of a region for which the tally signal is received among the plurality of items.

6. The electronic device according to claim 1,
wherein, in response to the reception of the tally signal, the control unit performs control such that an identification mode of one of a region for which the tally signal is received and a region for which the tally signal is not received among the plurality of regions is changed.

7. The electronic device according to claim 6,
wherein the display video includes a plurality of items respectively indicating the plurality of regions, and
wherein, in response to the reception of the tally signal, the control unit performs control such that a mode of one of an item of a region for which the tally signal is received and an item of a region for which the tally signal is not received among the plurality of items is changed.

8. The electronic device according to claim 1,
wherein the display video includes a plurality of items respectively indicating the plurality of regions, and
wherein the control unit performs control such that a border line surrounding an item of a region for which the tally signal is received among the plurality of items is displayed.

9. The electronic device according to claim 1,
wherein the control unit performs control such that a character string indicating a region for which the tally signal is received is displayed at a position not superimposed on the plurality of regions.

10. The electronic device according to claim 9,
wherein the display video includes a plurality of items respectively indicating the plurality of regions, and
wherein the character string indicates an item of a region for which the tally signal is received among the plurality of items.

11. The electronic device according to claim 9,
wherein the output unit outputs the plurality of output videos from a plurality of terminals, respectively, and
wherein the character string indicates a terminal of an output video for which the tally signal is received among the plurality of terminals.

12. The electronic device according to claim 1,
wherein the tally signal corresponds to one of a plurality of states,
wherein the output unit is capable of outputting two or more output videos corresponding to one region, and
wherein, in a case where a plurality of tally signals corresponding to one region is received, the control unit performs control such that an item indicating all of states corresponding to the plurality of tally signals is displayed in association with the one region.

13. The electronic device according to claim 1,
wherein the tally signal corresponds to one of a plurality of states,
wherein the output unit is capable of outputting two or more output videos corresponding to one region, and
wherein, in a case where a plurality of tally signals corresponding to one region are received and one of the plurality of tally signals corresponds to a specific state, the control unit performs control such that only an item indicating the specific state is displayed in association with the one region.

14. The electronic device according to claim 1, further comprising
a second output unit configured to output the received tally signal to a tally lamp.

15. The electronic device according to claim 14,
wherein the tally signal corresponds to one of a plurality of states, and
wherein, in a case where two or more tally signals respectively corresponding to two or more output videos are received and one of the two or more tally signals corresponds to a specific state, the second output unit outputs only the tally signal of the specific state among the two or more tally signals.

16. The electronic device according to claim 1, further comprising
a second output unit configured to output the received tally signal to an external device.

17. The electronic device according to claim 16,
wherein the tally signal corresponds to one of a plurality of states, and
wherein, in a case where two or more tally signals respectively corresponding to two or more output videos are received and one of the two or more tally signals corresponds to a specific state, the second output unit outputs only the tally signal of the specific state among the two or more tally signals.

18. The electronic device according to claim 1,
wherein the reception unit receives the tally signal by communicating with outside.

19. The electronic device according to claim 1,
wherein the output unit outputs the plurality of output videos from a plurality of terminals, respectively, and
wherein the reception unit receives the tally signal in at least one of a plurality of input terminals respectively corresponding to the plurality of terminals.

20. The electronic device according to claim 19,
wherein the tally signal corresponds to one of a plurality of states, and
wherein, in a case where the tally signal corresponding to a specific state is received in one of the plurality of input terminals, the reception unit further receives a predetermined signal in a second input terminal.

21. The electronic device according to claim 1, further comprising
an imaging unit configured to capture a video,
wherein the acquisition unit acquires a video captured by the imaging unit.

22. The electronic device according to claim 1,
wherein the acquisition unit acquires a video captured by an imaging device, and
wherein the output unit outputs a video to an external device connected to the electronic device.

23. A control method of an electronic device, comprising:
an acquisition step of acquiring an input video;
an output step of outputting a plurality of output videos respectively corresponding to a plurality of regions in the input video;
a reception step of receiving a tally signal for at least one of the plurality of output videos; and
a control step of performing control such that a display video that is a video based on the input video and is a video in which the plurality of regions is identifiable is displayed,
wherein in the control step, control is performed such that it is identifiable in the display video which of the plurality of regions the received tally signal corresponds to.

24. A program that causes a computer to function as each unit of the electronic device according to any one of claims 1 to 22.

25. A computer readable medium storing a program that causes a computer to function as each unit of the electronic device according to any one of claims 1 to 22.
